# EUROPEAN PATENT SPECIFICATION

(11) **EP 3 284 283 B1**
(45) Date of publication and mention of the grant of the patent: **17.02.2021**
(21) Application number: 15728606.3
(22) Date of filing: 17.04.2015
(51) Int. Cl.: H04W 28/08, H04W 28/02, H04W 36/30, H04W 48/18

(54) **THROTTLING-BASED TRAFFIC STEERING**
DROSSELUNGSBASIERTE VERKEHRSSTEUERUNG
ORIENTATION DU TRAFIC PAR LIMITATION

(43) Date of publication of application: 21.02.2018
(73) Proprietor: Telefonaktiebolaget LM Ericsson (publ), 164 83 Stockholm (SE)
(72) Inventor: TAN BERGSTROM, Mattias, SE-120 71 Stockholm (SE); KAROUT, Johnny, SE 417 29 Göteborg (SE); HEDBERG, Tomas, SE-113 26 Stockholm (SE)
(74) Representative: Zacco Sweden AB
(86) International application number: PCT/IB2015/052831
(87) International publication number: WO 2016/166580

(56) References cited:
- EP-A1- 2 320 699
- WO-A1-2014/182211
- US-A1- 2010 214 943
- "3rd Generation Partnership Project; Technical Specification Group Radio Access Network; Study on Wireless Local Area Network (WLAN) - 3GPP radio interworking (Release 12)", 3GPP DRAFT; 37834-C00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 7 January 2014 (2014-01-07), XP050907591, Retrieved from the Internet: URL:http://www.3gpp.org/ftp/Specs/2014-12/ Rel-12/37_series/ [retrieved on 2014-01-07]

## Description

### Technical Field

The present disclosure relates to traffic steering in a wireless communications network.

### Background

The Institute of Electrical and Electronics Engineers (IEEE) has created and maintains IEEE 802.11 specifications, which are a set of Media Access Control (MAC) and Physical Layer (PHY) specifications, for implementing Wireless Local Area Network (WLAN) computer communication in the 2.4, 3.6, 5, and 60 gigahertz (GHz) frequency bands. WLAN is also commonly referred to as Wi-Fi, and these terms may be used interchangeably throughout this document. The IEEE 802.11 specifications regulate access points and wireless terminals to secure compatibility and inter-operability between the access points and portable terminals (referred to herein as wireless devices). Wi-Fi is generally operated in unlicensed bands, and as such, communication over Wi-Fi may be subject to interference sources from any number of both known and unknown devices. Wi-Fi is commonly used as wireless extensions to fixed broadband access, e.g., in domestic environments and hotspots, like airports, train stations, and restaurants.

Recently, Wi-Fi has been subject to increased interest from cellular network operators. The interest is mainly about using the Wi-Fi technology as an extension to cellular radio access network technologies to handle increasing wireless bandwidth demands. Cellular operators that are currently serving mobile users with, e.g., any of the 3^{rd} Generation Partnership Project (3GPP) technologies such as Long Term Evolution (LTE), Universal Mobile Telecommunications System (UMTS), Wideband Code Division Multiple Access (WCDMA), or Global System for Mobile Communications (GSM) may see Wi-Fi as a wireless technology that can provide good support in their regular cellular networks. The term "operator-controlled Wi-Fi" points to a Wi-Fi deployment that on some level is integrated with a cellular network operator's existing network and where the 3GPP radio access networks and the Wi-Fi wireless access may even be connected to the same core network and provide the same services.

Some groups are interested in developing standards for the interworking of the cellular radio access networks and Wi-Fi networks. In 3GPP, activities to connect Wi-Fi access points to the 3GPP-specified core network are being pursued, and in the Wi-Fi Alliance (WFA), activities related to certification of Wi-Fi products are undertaken, which to some extent also are driven by a need to make Wi-Fi a viable wireless technology for cellular operators to support high bandwidth offerings in their networks. The term Wi-Fi offload is commonly used and refers to a situation in which cellular network operators seek means to offload traffic from their cellular networks to Wi-Fi, e.g., during times of high traffic or in situations when the cellular network for one reason or another needs to be off-loaded.

For a cellular operator offering a mix of two technologies that are standardized in isolation from each other, providing intelligent mechanisms for the co-existence of the two technologies is a challenge. One area of challenge is connection management. Wireless devices often support both Wi-Fi and a number of 3GPP cellular technologies, but many of the wireless devices are basically behaving as two separate devices from a radio access perspective. The 3GPP radio access network and the modems and protocols that are operating pursuant to the 3GPP specifications are basically unaware of the wireless access Wi-Fi protocols and modems that are operating pursuant to the 802.11 specifications.

As discussed above, up until now, 3GPP and Wi-Fi standards have evolved as two separate systems. However, recent activities in 3GPP and WFA have taken the initiative to improve the interoperability of the two systems and provide mobile operators with a greater control over their "operator-deployed" WLANs.

There is work ongoing in the 3GPP RAN2 working group to further enhance the 3GPP RAN and Wi-Fi interworking on the 3GPP Radio Resource Control (RRC) protocol layer. This means that new wireless device functionality will be available.

Two alternatives currently exist for performing traffic steering between two Radio Access Technologies (RATs). One alternative is based on conditions and thresholds provided to the wireless device by a first RAT which dictates in which situations the wireless device should steer traffic from/to a second RAT. This alternative is applicable whether a connection exists between the wireless device and the first RAT, e.g. both when the wireless device is in RRC_CONNECTED mode in 3GPP LTE and when the wireless device is in IDLE mode in LTE.

Another alternative is for a first RAT, e.g. a 3GPP RAT, to control a wireless device's connection to a second RAT, e.g. WLAN, by sending traffic steering commands ordering the wireless device to steer traffic from/to the second RAT. To send the traffic steering command, a connection established between the wireless device and the first RAT is required, e.g. a wireless device must be in RRC_CONNECTED mode in 3GPP LTE if LTE should be sending traffic steering commands.

However, these alternatives for traffic steering and others like them require support by the wireless devices. Wireless devices which are not capable of implementing such features cannot be controlled by the network using these alternatives. As such, there is a need for ways to provide traffic steering of a wireless device being served by a wireless communications network. EP2320699A1 discloses a method of triggering handover of a user terminal from a macrocell base station to a femtocell base station. The femtocell base station sends a triggering signal to the user terminal at the carrier frequency of the macrocell to cause interference, the user terminal reacting by seeking to transfer the connection to the femtocell base station.

WO2014/182211A1 discloses, in accordance with the preamble of each independent claim, a method in a node in a first access network, comprising sending a first set of thresholds and/or conditions to a terminal, defining situations in which the terminal should connect to a second access network and/or steer at least some traffic to the second access network; and sending a second set of thresholds and/or conditions to the terminal defining situations in which the terminal should disconnect from the second access network and/or connect to the first access network and/or steer at least some traffic to the first access network.

US2010/214943A1 discloses that a base station may reduce its transmission power level as it approaches a threshold user capacity, to force cell edge UEs to transfer edge loads to neighbor cells that may proportionally increase their radio power operating level in order to expand their coverage area, if they were determined to have excess user load capacity. Alternatively the base station may raise its minimum modulation and coding level as it approaches user capacity, to force a UE with lower link quality to transfer to neighbor cells that might concurrently lower their modulation and coding threshold to accept the UE.

### Summary

Aspects of the present invention are as defined in the independent claims, reference to which should now be made. Optional features are defined in the dependent claims.

Those skilled in the art will appreciate the scope of the present disclosure and realize additional aspects thereof after reading the following detailed description of the embodiments claimed in association with the accompanying drawing figures.

### Brief Description of the Drawings

The accompanying drawing figures incorporated in and forming a part of this specification illustrate several aspects of the disclosure, and together with the description serve to explain the principles of the disclosure.
Figure 1 is a diagram depicting an exemplary wireless communications network and a different wireless communications network according to some embodiments of the present disclosure;
Figure 2 illustrates a procedure to provide traffic steering of a wireless device being served by the wireless communications network according to some embodiments of the present disclosure;
Figure 3 illustrates a procedure to monitor and, if needed, terminate communication throttling for a wireless device being served by the wireless communications network according to some embodiments of the present disclosure;
Figure 4 is a block diagram of a radio access node according to some embodiments of the present disclosure;
Figure 5 is a block diagram of a wireless device according to some embodiments of the present disclosure; and
Figure 6 is a block diagram of a network node including a wireless device selecting module and a connection throttling module according to some embodiments of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

In a wireless communications network it may be determined that offload of one or more wireless devices is desired. To accomplish this, the wireless communications network may provide traffic steering of one or more wireless devices. There are currently several ways to provide traffic steering, but these require support by the wireless devices. Wireless devices which are not capable of implementing such features cannot be controlled by the network using these alternatives. As such, there is a need for ways to provide traffic steering of a wireless device being served by a wireless communications network. As used herein, a wireless communications network may refer to a cellular communications network, a Wireless Local Area Network (WLAN), or any other suitable wireless communications network.

Some wireless devices may employ a network selection-strategy where each wireless device is trying to select the access which provides the highest throughput for that user. For example if a wireless device achieves *X* Mbps in a Long Term Evolution (LTE) cellular communications network while achieving *Y* Mbps in a WLAN, and *X*>*Y*, the wireless device will select the LTE network. This selection-strategy may work reasonably well in some scenarios; however, since one particular wireless device has limited knowledge, e.g., does not have a system-level view over the network, this selection strategy may hurt the overall system performance. Consider, for example, a first wireless device in the coverage of a WLAN Access Point (AP) which is located close to an LTE base station. This wireless device may get higher throughput if being served by the LTE base station compared to being served by the WLAN; however, other wireless devices which may not be in the coverage of WLAN may benefit from that first wireless device steering traffic to WLAN to free up resources in the LTE network, even though the first wireless device may not achieve as high throughput in the WLAN. Systems and methods are disclosed herein for throttling-based traffic steering.

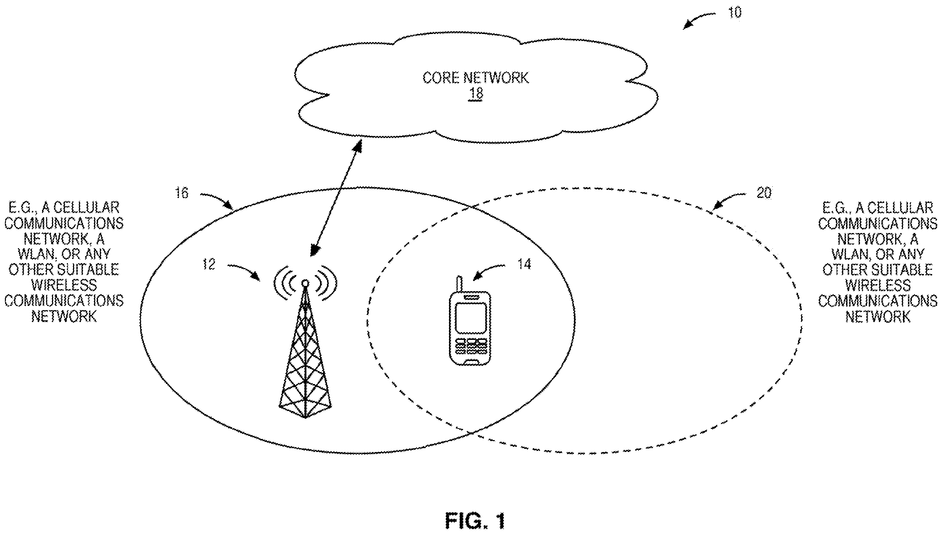

In this regard, Figure 1 is a diagram depicting an exemplary wireless communications network 10 including a radio access node 12 that can communicate with a wireless device 14 in a cell 16 provided by the radio access node 12. The radio access node 12 is in communication with a core network 18 that may provide many services and connectivity for the wireless communications network 10. The core network 18 may include multiple nodes such as a Mobile Switching Center (MSC), a Mobility Management Entity (MME), a Packet Data Network Gateway (P-GW), a Serving Gateway (S-GW), etc. Figure 1 also shows the boundary of a different wireless communications network 20. This different wireless communications network 20 may be a cellular communications network, a WLAN, or any other suitable network.

The radio access node 12 is, in general, any node in a Radio Access Network (RAN) of the wireless communications network 10. In some embodiments, the radio access node 12 is a base station (e.g., an evolved Node B (eNB) in a LTE network) or a WLAN AP in a WLAN. The wireless device 14 may be any type of wireless device enabled to communicate with the radio access node 12. In LTE, the wireless device 14 may be referred to as a User Equipment device (UE), while in a WLAN, the wireless device 14 may be referred to as a Station (STA). While only one wireless device 14 is illustrated in Figure 1, there may be any number of wireless devices 14 served by the radio access node 12. Notably, much of the discussion herein focuses on embodiments in which the wireless communications network 10 is a 3^{rd} Generation Partnership Project (3GPP) LTE cellular communications network. As such, 3GPP terminology is oftentimes used herein. However, while the embodiments described herein focus on 3GPP LTE, the embodiments and concepts disclosed herein may be used in any suitable type of existing or future cellular communications network including for example, 3G networks (e.g. Universal Mobile Telecommunications System (UMTS)), 4G networks (Worldwide Interoperability for Microwave Access (WiMAX), LTE, Long Term Evolution Advanced (LTE-A)), 5G or other future networks where feedback bundling is used. Also, much of the discussion herein focuses on embodiments in which the different wireless communications network 20 is a WLAN, but the same concepts could also apply to other types of networks which may desire to steer traffic of a wireless device 14. As used herein, a network node 22 refers to either a radio access node 12 or a node from the core network 18.

In some embodiments, a method of operation of a network node 22 in the wireless communications network 10 to provide traffic steering of a wireless device 14 being served by the wireless communications network 10 includes selecting the wireless device 14 to be steered away from the wireless communications network 10 and throttling a connection of the wireless device 14 to the wireless communications network 10 to provide traffic steering of the wireless device 14 away from the wireless communications network 10. In some embodiments, this connection throttling will induce the wireless device to steer away from the wireless communications network 10 to the different wireless communications network 20. As used herein, steering a wireless device 14 away from the wireless communications network 10 refers to transferring at least some portions of communication to or from the wireless device 14 from the wireless communications network 10 to a different wireless communications network 20. In some embodiments, this may involve the wireless device 14 completely disconnecting from the wireless communications network 10. In other embodiments, this may involve only a portion of or a specific type of communication be transferred away from the wireless communications network 10. Also, in some embodiments, the wireless device 14 may be steered from a cellular communications network to a different cellular communications network, from a cellular communications network to a WLAN, from a WLAN to a different WLAN, or from a WLAN to a cellular communications network.

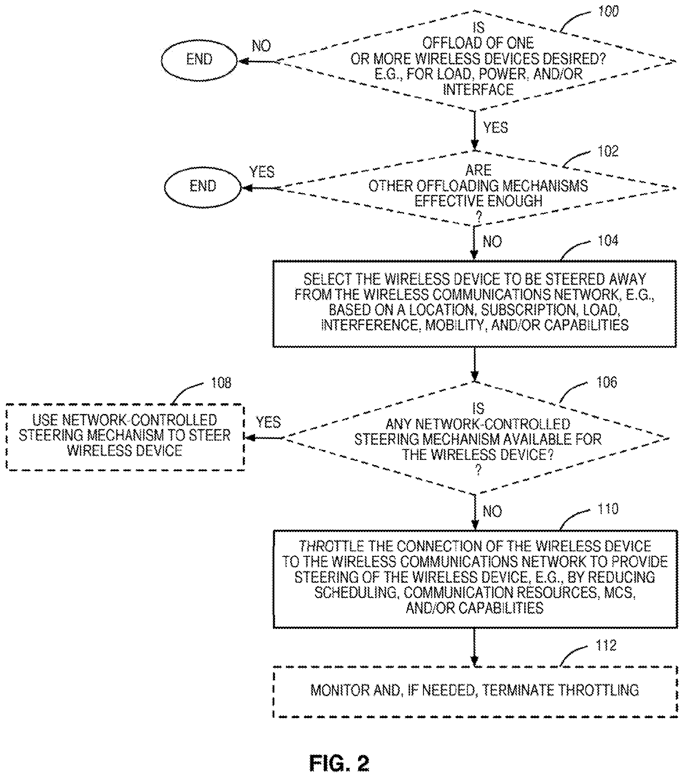

Figure 2 illustrates a procedure to provide traffic steering of a wireless device 14 being served by the wireless communications network 10 according to some embodiments of the present disclosure. A network node 22 optionally determines if offloading of one or more wireless devices 14 is desired (step 100). If offload is not desired, the procedure ends according to some embodiments. There are several reasons that could lead to a determination that offload of one or more wireless devices 14 is desired. For example, the network node 22 may determine that offloading of one or more wireless devices 14 in a portion of the wireless communications network 10 is desired when the load in that portion of the wireless communications network 10 is high. This could be implemented as an event which would be triggered when the load exceeds a certain threshold, or that the load has been above the certain threshold for a certain time. Load here could be measured by considering one or more metrics. Specifically, the network node 22 may determine that offloading of one or more wireless devices 14 in a portion of the wireless communications network 10 is desired if the utilization of the radio resources exceeds 80%, for example. It should be noted that the radio resources include not only the time-frequency resources used for transmission of data between the wireless communications network 10 and the wireless device 14, the radio resources also include control channel resources (e.g., Physical Uplink Control Channel (PUCCH) resources in LTE), random access procedure resources, etc.

In some embodiments, some network nodes 22 may be limited by their processing capacity which may translate to a limitation in the amount of wireless devices 14 they can serve. To avoid a situation in which the wireless communications network 10 gets overloaded due to limitations of the processing capacity, the network node 22 may determine that offloading of one or more wireless devices 14 is desired when the processing load exceeds a certain threshold. In some embodiments, the backhaul link of a network node 22 may be the limit, and hence the network node 22 may determine that offloading of one or more wireless devices 14 is desired if the backhaul link capacity falls below a certain threshold or that the available backhaul link is loaded above a certain threshold.

When the wireless communications network 10 determines its load, it may consider one or more metrics, e.g. the load could be considered high if the load is high according to at least one of the metrics, i.e., the load may be considered high if the radio resource utilization is high or if the processing load of the network is considered high or if the backhaul capacity is considered high.

The network node may determine that offloading of one or more wireless devices 14 is desired, at least partially, to improve power efficiency. The network node 22 may prefer to steer the wireless devices 14 to the different wireless communications network 20 to be able to turn off certain network nodes 22. Consider, for example, a scenario where only a few wireless devices 14 are served on an LTE carrier. If these wireless devices 14 were offloaded to a WLAN network it could be possible to turn the LTE carrier off. Therefore, the eNB serving the LTE carrier may throttle the terminals on the carrier to try to empty and then turn off the carrier.

In many wireless networks, there are multiple nodes using the same frequency resources. For example, each eNB in an LTE network may have a carrier on the 2.1 GHz frequency. Since the carriers on the same frequency will interfere with each other, it may be beneficial to reduce the utilization of a carrier for the benefit of carriers in other nodes. Therefore, the network node 22 may determine that offloading of one or more wireless devices 14 is desired so that the utilization of a carrier is reduced, and hence the interference on that frequency is reduced. For example, a first network node 22 may initiate throttling to reduce the interference created for a second network node 22 based on an indication sent from the second network node 22 to the first network node 22 which indicates that the interference is high. Reducing the interference to a certain carrier is especially useful if the carrier is used for communicating with a wireless device 14 which has poor radio conditions, such as a wireless device 14 on the edge of the cell 16.

In some embodiments, there may be an interlace between the wireless communications network 10 and the different wireless communications network 20. In this case, it may be possible to have an entity which estimates the expected user experience in the respective networks. Based on such an estimation, the network node 22 may determine that a wireless device 14 may receive a better user experience in the different wireless communications network 20, such as a WLAN, and hence would want to offload the terminal to the WLAN. The network node 22 may then select that wireless device 14 for steering away from the wireless communications network 10 in an attempt to make the terminal steer traffic to the WLAN. In embodiments with an interface between the wireless communications network 1 0 and the different wireless communications network 20, the WLAN is loaded, and the network node 22 could also apply the throttling mechanism to make wireless devices 14 steer traffic to the wireless communications network 10 from the different wireless communications network 20 by using similar techniques to those discussed below.

Returning to Figure 2, if offload of one or more wireless devices 14 is desired, the network node 22 then optionally determines if other offloading mechanisms are effective enough (step 102). If the other offloading mechanisms are not effective enough, the network node 22 selects the wireless device 14 to be steered away from the wireless communications network 10 (step 104). The selection of the wireless device 14 (or devices) may depend on several factors provided as available information by both networks. Such information could include backhaul congestion, user position, delay, subscription information and interference, load on cells of the wireless communications network 10, load on the different wireless communications network 20, mobility pattern of the wireless devices 14, capabilities of the wireless devices 14, energy saving possibilities, etc.

In some embodiments, selecting the wireless device 14 to be steered away from the wireless communications network 10 could be based on user position combined with other information available, e.g. interference, direction of arrival, etc. In the event that the wireless device 14 is close to one or more WLANs, the network node 22 could select the wireless device 14 to be steered away from the wireless communications network 10 to offload the wireless device 14 to the WLAN, This mechanism could also be applied to make wireless devices 14 steer their traffic toward the wireless communications network 10.

In some embodiments, the network node 22 uses information about mobility patterns of a certain wireless device 14 combined with information from the core network 18 and local information in the RAN. Such information could affect the decision on selecting the wireless device 14 to be steered away from the wireless communications network 10. For example, slowly moving wireless devices 14 could benefit from offloading their traffic to WLAN. This may allow the wireless communications network 10 to reduce its load and the wireless device 14 to have a better quality of service.

The network node 22 may consider the capabilities of the wireless device 14 when deciding whether or not to select the wireless device 14 to be steered away from the wireless communications network 10. The network node 22 may select wireless devices 14 to be steered away from the wireless communications network 10 which do not support a certain feature; for example, the network node 22 may decide not to steer wireless devices 14 which support a feature used for traffic steering between 3GPP and WLAN, such as the features described in the Background section.

If the network node 22 determines that offloading is desired due to load reasons, the wireless communications network 10 may not benefit as much from offloading a wireless device 14 which is generating only a small amount of traffic. The network node 22 may therefore consider the amount of traffic the wireless device 14 is generating when selecting the wireless device 14 to be steered away from the wireless communications network 10. The network node 22 may select the wireless device 14 to be steered away from the wireless communications network 10 if the amount of traffic the wireless device 14 is generating exceeds a certain threshold, e.g., 10 Mbps. It would also be possible for the network node 22 to consider how much traffic the wireless device 14 is generating in relation to the other wireless devices 14, e.g., if one wireless device 14 is generating 30% of the current load, the network node 22 may select this wireless device 14 to be steered away from the wireless communications network 10.

In some embodiments, the network node 22 may consider the wireless device's 14 ongoing services when determining whether or not to select the wireless device 14 to be steered away from the wireless communications network 10. If the wireless device 14 is using a service which has strict Quality of Service (QoS) requirements, the wireless device 14 may not be suitable for selection as the QoS requirement of the services may not be fulfilled. In some embodiments, the network node 22 determines that the services the wireless device 14 is using are not suitable and/or possible to steer to the different wireless communications network 20 (such as a WLAN), and hence the wireless device 14 is not selected.

Returning to Figure 2, the network node 22 may optionally determine if any network-controlled steering mechanism is available for the wireless device 14 selected for steering (step 106), As discussed above, one or more of the wireless devices 14 may be capable of being offloaded using other mechanisms. In some embodiments, these mechanisms may be used first before a connection is throttled. If the other offloading mechanisms are effective enough, the network-controlled steering mechanism may be used to steer the wireless device 14 (step 108). If no network-controlled steering mechanism is available for the wireless device 14, the network node 22 throttles the connection of the wireless device 14 to the wireless communications network 10 to provide steering of the wireless device 14 (step 110). Throttling the connection may be accomplished in many different ways. The network node 22 may employ one or more throttling mechanisms discussed below or any other suitable throttling mechanism.

In some embodiments, the network node 22 may reduce the frequency with which the wireless device 14 is scheduled. In 3GPP networks it is the wireless communications network 10 that schedules when the wireless device 14 should receive/transmit. If the wireless communications network 10 would like to throttle a wireless device 14, the wireless communications network 10 can decide to schedule that wireless device 14 less often, which generally will result in the throughput of the wireless device 14 (and other QoS related metrics) being reduced.

Also, when the network node 22 schedules a transmission to/from a wireless device 14, the network node 22 decides the amount of resources that should be used for the transmission. For example, in LTE, the network node 22 selects an amount of frequency resource Physical Resource Blocks (PRBs) that should be used for the transmission. If the network node 22 wants to throttle the wireless device 14, the network node 22 may schedule the wireless device 14 with a limited amount of resources, e.g. fewer PRBs.

The network node 22 also decides which modulation and coding scheme (MCS) will be used for the transmission. For example, the network node 22 could decide that 64 Quadrature Amplitude Modulation (QAM) with efficient coding rates should be used for a transmission when the radio channel between the wireless device 14 and the radio access node 12 is good (e.g., when Signal to Interference plus Noise Ratio (SINR) is high); while if the channel conditions are not as good, the network node 22 may decide to use Binary Phase Shift Keying (BPSK) modulation with robust coding rate, which provides a more reliable transmission over a poor radio channel compared to 64 QAM. However, with higher modulation and coding schemes, more data can be transmitted per symbol, which translates to higher throughput. Therefore, the network node 22 can vary the modulation and coding rate to perform throttling. For example, even if the channel conditions would normally allow the use of 64 QAM and a higher throughput, the network node 22 may still schedule the transmission with BPSK in order to provide a restricted throughput.

In some embodiments, the network node 22 may also disable some features which are used to increase the throughput for a wireless device 14. For example, the network node 22 may disable Mulilpie-Input/Multiple-Output (MIMO), Carrier Aggregation and/or Dual Connectivity, etc. By disabling one or more of these features, the throughput of the wireless device 14 may be restricted, throttling the connection.

In some embodiments, it may also be possible for the network node 22 to throttle specific traffic for a wireless device 14. Consider, for example, a wireless device 14 that has an ongoing video conference call (which may have strict QoS requirements) while also browsing the internet (which usually does not have strict QoS requirements), then the network may perform throttling of the browsing traffic, but not for the video conferencing traffic. This could be implemented as the network node 22 only throttling bearers with certain QoS Class Identifier (QCI) values. QCI values are used to indicate the QoS requirement for a bearer, and the network node 22 may then be implemented such that the network node 22 only applies to throttling of bearers with certain QCI values.

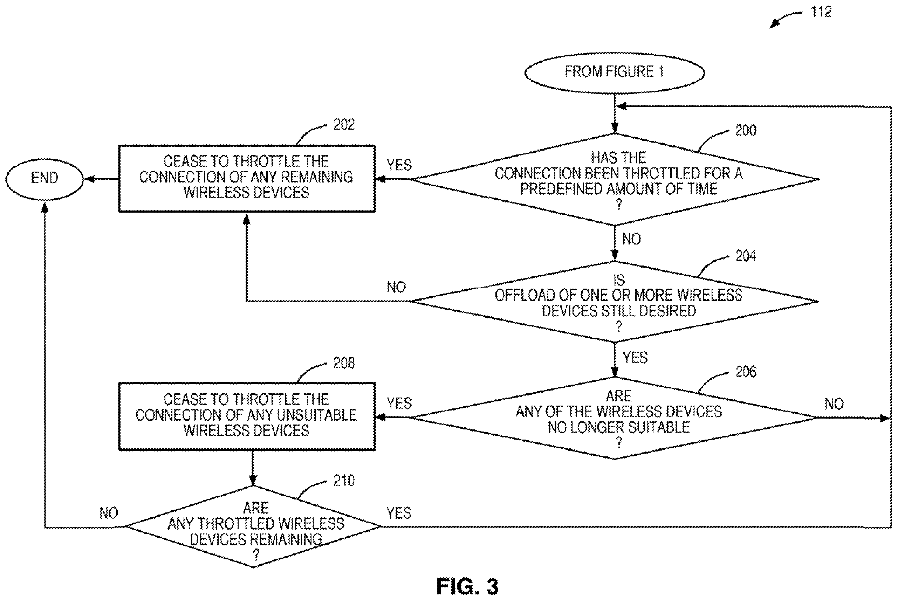

Returning to Figure 2, after throttling the connection of the wireless device 14 to the wireless communications network 10 to provide steering of the wireless device 14, the network node 22 optionally monitors and, if needed, terminates the throttling (step 112). Additional details that may be included in this step in some embodiments are shown in Figure 3. Figure 3 illustrates a procedure to monitor and, if needed, terminate communication throttling for a wireless device 14 being served by the wireless communications network 10 according to some embodiments of the present disclosure. First, the network node 22 determines if the connection been throttled for a predefined amount of time (step 200). This step may be beneficial since the network node 22 may not know whether the one or more wireless devices 14 have the possibility to steer traffic to the different wireless communications network 20 such as a WLAN. A wireless device 14 may, for example, not be capable of connecting to WLAN networks (e.g. the WLAN chipset may be disabled or not exist), the wireless device 14 may not be in coverage of a WLAN network, etc. Therefore, the throttling of a wireless device 14 may be done for a limited period of time to avoid a needlessly degraded user experience for the wireless device 14 that cannot steer traffic to WLAN. The network node 22 may apply the throttling for the wireless device 14 for a time which is expected to be needed to steer traffic to the different wireless communications network 20. In some embodiments, this time may be a few milliseconds to a few seconds. If the connection has been throttled for the predefined amount of time, the network node 22 will cease to throttle the connection of any remaining wireless devices 14 (step 202).

If the connection has not been throttled for the predefined amount of time, the network node 22 determines if the offload of one or more wireless devices 14 is still desired (step 204). The operation of this step may be dependent on the reason the network node 22 determined that offload of one or more wireless devices 14 was desirable to begin with. For instance, if the network node 22 determined that offload of one or more wireless devices 14 was desirable because the load was too high, then offloading may no longer be desired if the load has fallen below a threshold. Similarly, if the network node 22 determined that offload of one or more wireless devices 14 was desirable because the interference was too high, then offloading may no longer be desired if the interference has fallen below a threshold. If the offload of one or more wireless devices 14 is not still desired, the network node 22 will cease to throttle the connection of any remaining wireless devices 14 as in step 202.

If the offload of one or more wireless devices 14 is still desired, the network node 22 may determine if any of the wireless devices 14 are no longer suitable to be throttled (step 206). This analysis may be similar to the factors considered in step 104 discussed in Figure 2. For instance, if a wireless device 14 was selected to be steered away from the wireless communications network 10 based on location, the wireless device 14 may no longer be suitable to be steered away from the wireless communications network 10 if the wireless device 14 has changed locations. Also, if a wireless device 14 was selected to be steered away from the wireless communications network 10 based on the amount of traffic the wireless device 14 was generating, the wireless device 14 may no longer be suitable to be steered away from the wireless communications network 10 if the wireless device 14 has changed the amount of traffic the wireless device 14 is generating. If all of the wireless devices 14 being throttling are still suitable, the network node 22 may make no changes to the connection throttling and return to the beginning of the procedure according to some embodiments.

If any of the wireless devices 14 are no longer suitable to be throttled, the network node 22 may cease to throttle the connection of any unsuitable wireless devices 14 (step 208). At this point, the network node 22 determines if any throttled wireless devices 14 are remaining (step 210). If throttled devices are remaining, the network node 22 may make no changes to the connection throttling and return to the beginning of the procedure according to some embodiments. If no throttled wireless devices 14 are remaining, the procedure may end according to some embodiments or return to one of the steps described in Figure 2 to possibly repeat this or a similar process.

Figure 3 shows three separate conditions that may lead the network node 22 to cease throttling of one or more wireless device 14 (steps 200, 204, and 206). However, it should be noted that these are only examples. In some embodiments, only a subset of these conditions may be applied and they may be applied in a different order. Also, other tests or conditions may be desired. All of these variations are encompassed by the monitor and, if needed, terminate throttling of step 112.

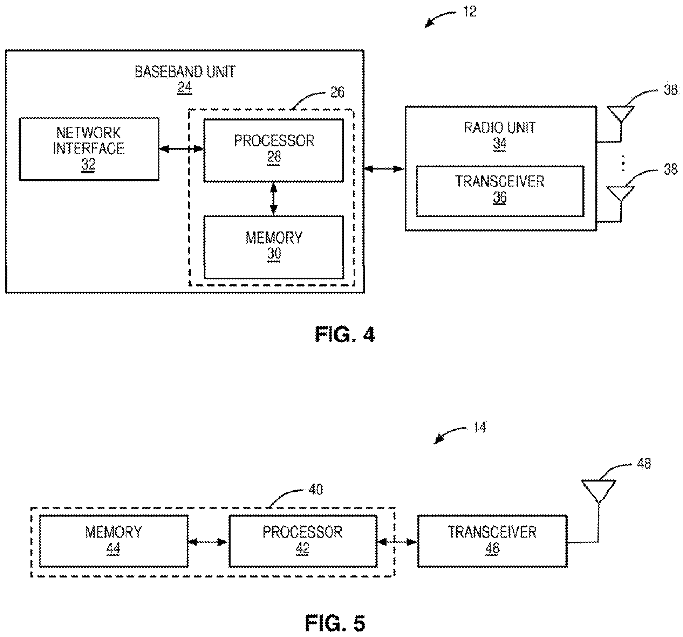

Figure 4 is a block diagram of a radio access node 12 according to some embodiments of the present disclosure. In some embodiments, the radio access node 12 includes circuitry containing instructions, which when executed, cause the radio access node 12 to implement the methods and functionality described here with respect to network node 22. In one example, the circuitry can be in the form of processing means which may include a processor and a memory containing instructions. As illustrated, the radio access node 12 includes a baseband unit 24 that includes circuitry 26. The circuitry 26 may include at least one processor 28 and memory 30. The baseband unit 24 also includes a network interface 32. As illustrated, the radio access node 12 also includes a radio unit 34 with a transceiver 36 and one or more antennas 38. In some embodiments, the radio access node 12, or the functionality of the radio access node 12 described with respect to any one of the embodiments described herein, is implemented in software that is stored in, e.g., the memory 30 and executed by the processor 28. The network interface 32 may include one or more components (e.g., network interface card(s)) that connect the radio access node 12 to other systems.

In some embodiments, a computer program including instructions which, when executed by the at least one processor 28, causes the at least one processor 28 to carry out the functionality of the radio access node 12 according to any one of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as the memory 30).

Figure 5 is a block diagram of a wireless device 14 according to some embodiments of the present disclosure. As illustrated, the wireless device 14 includes circuitry 40 which includes at least one processor 42 and memory 44. The wireless device 14 also includes a transceiver 46 and at least one antenna 48. In some embodiments, wireless device 14, or the functionality of the wireless device 14 described with respect to any one of the embodiments described herein, is implemented in software that is stored in, e.g., the memory 44 and executed by the processor 42. The transceiver 46 uses the at least one antenna 48 to transmit and receive signals and may include one or more components that connect the wireless device 14 to other systems,

In some embodiments, a computer program including instructions which, when executed by at least one processor 42, causes the at least one processor 42 to carry out the functionality of the wireless device 14 according to any one of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as the memory 44).

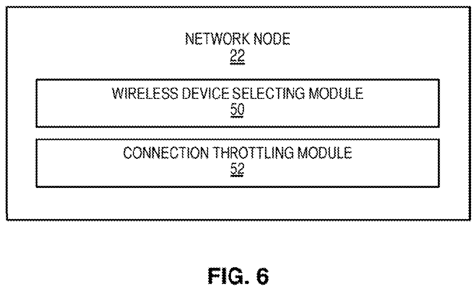

Figure 6 is a block diagram of a network node 22 including a wireless device selecting module 50 and a connection throttling module 52 according to some embodiments of the present disclosure. The wireless device selecting module 50 and the connection throttling module 52 are each implemented in software that, when executed by a processor of the network node 22, causes the network node 22 to operate according to one of the embodiments described herein. The wireless device selecting module 50 operates to select a wireless device 14 to be steered away from the wireless communications network 10, as described above with respect to the selecting step 104. The connection throttling module 52 operates to throttle a connection of the wireless device 14 to the wireless communications network 10 to provide traffic steering of the wireless device 14 away from the wireless communications network 10 as discussed above with respect to step 110.

The following acronyms are used throughout this disclosure.

| | |
|---|---|
| • 3G | 3^{rd} Generation |
| • 3GPP | 3^{rd} Generation Partnership Project |
| • 4G | 4^{th} Generation |
| • 5G | 5^{th} Generation |
| • AC | Access Controller |
| • AP | Access Point |
| • BPSK | Binary Phase Shift Keying |
| • BSC | Base Station Controller |
| • CA | Carrier Aggregation |
| • DC | Dual Connectivity |
| • eNB | Evolved Node B |
| • GHz | gigahertz |
| • GSM | Global System for Mobile Communications |
| * IEEE | Institute of Electrical and Electronics Engineers |
| • LTE | Long Term Evolution |
| • LTE-A | Long Term Evolution Advanced |
| • MAC | Media Access Control |
| • MCS | Modulation and Coding Scheme |
| • MM E | Mobility Management Entity |
| • MSC | Mobile Switching Center |
| • MIMO | Multiple-Input/Multiple-Output |
| • P-GW | Packet Data Network Gateway |
| • P HY | Physical Layer |
| • PRB | Physical Resource Block |
| • PUCCH | Physical Uplink Control Channel |
| • QAM | Quadrature Amplitude Modulation |
| • QCI | Quality of Service Class Identifier |
| • QPSK | Quadrature Phase Shift Keying |
| • QoS | Quality of Service |
| • RAN | Radio Access Network |
| • RAT | Radio Access Technology |
| • RNC | Radio Network Controller |
| • RRC | Radio Resource Control |
| • S-GW | Serving Gateway |
| • SINR | Signal to Interference plus Noise Ratio |
| • STA | Station |
| • UE | User Equipment |
| • UMTS | Universal Mobile Telecommunications System |
| • WCDMA | Wideband Code Division Multiple Access |
| • WFA | Wi-Fi Alliance |
| • WiMAX | Worldwide Interoperability for Microwave Access |
| • WLAN | Wireless Local Area Network |

Those skilled in the art will recognize improvements and modifications to the embodiments of the present disclosure. All such improvements and modifications are considered within the scope of the concepts disclosed herein and the claims that follow.

## Claims

1. A method of operation of a network node (22) in a wireless communications network (10) to provide traffic steering of a wireless device (14) being served by the wireless communications network (10), comprising:
determining (100) that offload of one or more wireless devices in the wireless communications network (10) is desired, when it is determined that a level of interference in a portion of the wireless communications network (10) serving the one or more wireless devices (14) is higher than an interference threshold;
after determining (100) that offload of one or more wireless devices in the wireless communications network (10) is desired, selecting (104) a wireless device (14) from the one or more wireless devices (14) to be steered away from the wireless communications network (10), based on a level of interference caused by the wireless device (14), to connect to another wireless communications network; and
throttling (110) at least one transmission parameter of a connection of the wireless device (14) to the wireless communications network (10) to provide traffic steering of the wireless device (14) away from the wireless communications network (10), wherein throttling the at least one transmission parameter of the connection comprises at least one of reducing a number of scheduling instances during which the wireless device (14) is scheduled to communicate with the wireless communications network (10) and disabling a feature of the wireless device (14) including one or more of Multiple-Input/Multiple-Output, Carrier Aggregation and Dual Connectivity.

2. The method of claim 1, wherein selecting the wireless device (14) to be steered away from the wireless communications network (10) further comprises selecting the wireless device (14) based on at least one of: a subscription information of the wireless device (14); a load on the wireless communications network (10) caused by the wireless device (14); a mobility pattern of the wireless device (14); whether the wireless device (14) supports a feature used for traffic steering between networks; and a type of communication between the wireless device (14) and the wireless communications network (10).

3. The method of claim 1, wherein disabling the feature of the wireless device (14) comprises disabling at least one of the group consisting of a Multiple-Input and Multiple-Output, MIMO, capability, a Carrier Aggregation, CA, capability, an ability to use an unlicensed band, booster features, and a dual connectivity capability.

4. The method of claim 1, wherein determining that the offload of one or more wireless devices in the wireless communications network (10) is desired further comprises determining
that power usage of the wireless device (14) may be reduced by steering the wireless device (14) away from the wireless communications network (10).

5. The method of any of the preceding claims further comprising:
determining (204) if the offload of one or more wireless devices (14) of the wireless communications network (10) is still desired; and
in response to determining that the offload is no longer desired, ceasing to throttle the connection of the wireless device (14) to the wireless communications network (10).

6. The method of any of the preceding claims further comprising:
determining (206) if the wireless device (14) is still suitable to be throttled; and
in response to determining that wireless device (14) is no longer suitable, ceasing to throttle the connection of the wireless device (14) to the wireless communications network (10).

7. The method of any of the preceding claims wherein the wireless communications network (10) is one of a cellular communications network and a wireless local access network, and steering the wireless device (14) being served by the wireless communications network comprises steering the wireless device (14) to connect to a cellular communications network or a wireless local access network different from said wireless communications network (10).

8. A network node (22) for a wireless communications network (10) adapted to:
determine that offload of one or more wireless devices in the wireless communications network (10) is desired, when the network node (22) determines that a level of interference in a portion of the wireless communications network serving the one or more wireless devices (10) is higher than an interference threshold;
after determining that offload of one or more wireless devices in the wireless communications network (10) is desired, select a wireless device (14) from the one or more wireless devices (14) to be steered away from the wireless communications network (10), based on a level of interference caused by the wireless device (14), and to connect to another wireless communications network; and
throttle at least one transmission parameter of a connection of the wireless device (14) to the wireless communications network (10) to provide traffic steering of the wireless device (14) away from the wireless communications network (10), wherein at least one transmission parameter of a connection of the wireless device (14) is throttled by at least one of reducing a number of scheduling instances during which the wireless device (14) is scheduled to communicate with the wireless communications network (10) and disabling a feature of the wireless device (14) including one or more of Multiple-Input/Multiple-Output, Carrier Aggregation and Dual Connectivity.

9. The network node (22) of claim 8 adapted to perform the method of any of claims 2-7.

## Patentansprüche

1. Verfahren zum Betreiben eines Netzknotens (22) in einem drahtlosen Kommunikationsnetz (10) zum Bereitstellen von Verkehrssteuerung einer drahtlosen Vorrichtung (14), die durch das drahtlose Kommunikationsnetz (10) versorgt wird, umfassend:
Bestimmen (100), dass ein Auslagern von einer oder mehreren drahtlosen Vorrichtungen in dem drahtlosen Kommunikationsnetz (10) gewünscht ist, wenn bestimmt wird, dass ein Störpegel in einem Abschnitt des drahtlosen Kommunikationsnetzes (10), der die eine oder die mehreren drahtlosen Vorrichtungen (14) versorgt, höher als ein Störschwellenwert ist;
nach dem Bestimmen (100), dass ein Auslagern von einer oder mehreren drahtlosen Vorrichtungen in dem drahtlosen Kommunikationsnetz (10) gewünscht ist, Auswählen (104) einer drahtlosen Vorrichtung (14) aus der einen oder den mehreren drahtlosen Vorrichtungen (14), die von dem drahtlosen Kommunikationsnetz (10) weggesteuert werden soll, basierend auf einem Störpegel, der durch die drahtlose Vorrichtung (14) verursacht wird, um sich mit einem anderen drahtlosen Kommunikationsnetz zu verbinden; und
Drosseln (110) mindestens eines Übertragungsparameters einer Verbindung der drahtlosen Vorrichtung (14) mit dem drahtlosen Kommunikationsnetz (10), um Verkehrssteuerung der drahtlosen Vorrichtung (14) weg von dem drahtlosen Kommunikationsnetz (10) bereitzustellen, wobei das Drosseln des mindestens einen Übertragungsparameters der Verbindung mindestens eines von Reduzieren einer Anzahl von Planungsinstanzen, während derer das Kommunizieren der drahtlosen Vorrichtung (14) mit dem drahtlosen Kommunikationsnetz (10) geplant ist, und Deaktivieren eines Merkmals der drahtlosen Vorrichtung (14), einschließlich eines oder mehrerer von Multiple-Input/Multiple-Output, Carrier-Aggregation und dualer Konnektivität, umfasst.

2. Verfahren nach Anspruch 1, wobei das Auswählen der drahtlosen Vorrichtung (14), die von dem drahtlosen Kommunikationsnetz (10) weggesteuert werden soll, ferner Auswählen der drahtlosen Vorrichtung (14) basierend auf mindestens einem von Folgendem umfasst: einer Subskriptionsinformation der drahtlosen Vorrichtung (14); einer Last auf dem drahtlosen Kommunikationsnetz (10), die durch die drahtlose Vorrichtung (14) verursacht wird; einem Mobilitätsmuster der drahtlosen Vorrichtung (14); ob die drahtlose Vorrichtung (14) ein Merkmal unterstützt, das zur Verkehrssteuerung zwischen Netzwerken verwendet wird; und einem Typ der Kommunikation zwischen der drahtlosen Vorrichtung (14) und dem drahtlosen Kommunikationsnetz (10).

3. Verfahren nach Anspruch 1, wobei das Deaktivieren des Merkmals der drahtlosen Vorrichtung (14) Deaktivieren von mindestens einem aus der Gruppe bestehend aus Folgendem umfasst: einer Multiple-Input- und Multiple-Output-Fähigkeit, MIMO-Fähigkeit, einer Carrier-Aggregation-Fähigkeit, CA-Fähigkeit, einer Fähigkeit, ein lizenzfreies Band zu verwenden, Booster-Merkmalen und einer dualen Konnektivitätsfähigkeit.

4. Verfahren nach Anspruch 1, wobei das Bestimmen, dass das Auslagern von einer oder mehreren drahtlosen Vorrichtungen in dem drahtlosen Kommunikationsnetz (10) gewünscht ist, ferner Bestimmen umfasst,
dass der Stromverbrauch der drahtlosen Vorrichtung (14) durch Steuern der drahtlosen Vorrichtung (14) weg von dem drahtlosen Kommunikationsnetz (10) reduziert werden kann.

5. Verfahren nach einem der vorstehenden Ansprüche, ferner umfassend:
Bestimmen (204), ob das Auslagern von einer oder mehreren drahtlosen Vorrichtungen (14) aus dem drahtlosen Kommunikationsnetz (10) immer noch gewünscht ist; und
als Reaktion auf das Bestimmen, dass das Auslagern nicht mehr gewünscht ist, Beenden des Drosselns der Verbindung der drahtlosen Vorrichtung (14) mit dem drahtlosen Kommunikationsnetz (10).

6. Verfahren nach einem der vorstehenden Ansprüche, ferner umfassend:
Bestimmen (206), ob die drahtlose Vorrichtung (14) immer noch geeignet ist, gedrosselt zu werden; und
als Reaktion auf das Bestimmen, dass die drahtlose Vorrichtung (14) nicht mehr geeignet ist, Beenden des Drosselns der Verbindung der drahtlosen Vorrichtung (14) mit dem drahtlosen Kommunikationsnetz (10).

7. Verfahren nach einem der vorstehenden Ansprüche, wobei das drahtlose Kommunikationsnetz (10) eines von einem zellularen Kommunikationsnetz und einem drahtlosen lokalen Zugangsnetz ist und das Steuern der drahtlosen Vorrichtung (14), die von dem drahtlosen Kommunikationsnetz versorgt wird, das Steuern der drahtlosen Vorrichtung (14) derart, dass sie sich mit einem zellularen Kommunikationsnetz oder einem drahtlosen lokalen Zugangsnetz verbindet, das sich von dem drahtlosen Kommunikationsnetz (10) unterscheidet, umfasst.

8. Netzknoten (22) für ein drahtloses Kommunikationsnetz (10), der angepasst ist zum:
Bestimmen, dass ein Auslagern von einer oder mehreren drahtlosen Vorrichtungen in dem drahtlosen Kommunikationsnetz (10) gewünscht ist, wenn der Netzknoten (22) bestimmt, dass ein Störpegel in einem Abschnitt des drahtlosen Kommunikationsnetzes, der die eine oder die mehreren drahtlosen Vorrichtungen (10) versorgt, höher als ein Störschwellenwert ist;
nach dem Bestimmen, dass ein Auslagern von einer oder mehreren drahtlosen Vorrichtungen in dem drahtlosen Kommunikationsnetz (10) gewünscht ist, Auswählen einer drahtlosen Vorrichtung (14) aus der einen oder den mehreren drahtlosen Vorrichtungen (14), die von dem drahtlosen Kommunikationsnetz (10) weggesteuert werden soll, basierend auf einem Störpegel, der durch die drahtlose Vorrichtung (14) verursacht wird, und die sich mit einem anderen drahtlosen Kommunikationsnetz verbinden soll; und
Drosseln mindestens eines Übertragungsparameters einer Verbindung der drahtlosen Vorrichtung (14) mit dem drahtlosen Kommunikationsnetz (10), um Verkehrssteuerung der drahtlosen Vorrichtung (14) weg von dem drahtlosen Kommunikationsnetz (10) bereitzustellen, wobei mindestens ein Übertragungsparameter einer Verbindung der drahtlosen Vorrichtung (14) durch mindestens eines von Reduzieren einer Anzahl von Planungsinstanzen, während derer das Kommunizieren der drahtlosen Vorrichtung (14) mit dem drahtlosen Kommunikationsnetz (10) geplant ist, und Deaktivieren eines Merkmals der drahtlosen Vorrichtung (14), einschließlich eines oder mehrerer von Multiple-Input/Multiple-Output, Carrier-Aggregation und dualer Konnektivität, gedrosselt wird.

9. Netzknoten (22) nach Anspruch 8, der angepasst ist zum Durchführen des Verfahrens nach einem der Ansprüche 2 bis 7.

## Revendications

1. Procédé de fonctionnement d'un nœud de réseau (22) dans un réseau de communications sans fil (10) pour fournir une orientation de trafic d'un dispositif sans fil (14) étant desservi par le réseau de communications sans fil (10), comprenant :
la détermination (100) qu'un délestage d'un ou plusieurs dispositifs sans fil dans le réseau de communications sans fil (10) est souhaité, lorsqu'il est déterminé qu'un niveau d'interférence dans une partie du réseau de communications sans fil (10) desservant le ou les dispositifs sans fil (14) est supérieur à un seuil d'interférence ;
après détermination (100) qu'un délestage d'un ou plusieurs dispositifs sans fil dans le réseau de communications sans fil (10) est souhaité, la sélection (104) d'un dispositif sans fil (14) parmi le ou les dispositifs sans fil (14) à diriger à l'écart du réseau de communications sans fil (10), sur la base d'un niveau d'interférence causé par le dispositif sans fil (14), pour se connecter à un autre réseau de communications sans fil ; et
la limitation (110) d'au moins un paramètre de transmission d'une connexion du dispositif sans fil (14) au réseau de communications sans fil (10) pour fournir une orientation de trafic du dispositif sans fil (14) à l'écart du réseau de communications sans fil (10), dans lequel la limitation de l'au moins un paramètre de transmission de la connexion comprend au moins l'une parmi la réduction d'un nombre d'instances de planification pendant lesquelles le dispositif sans fil (14) est planifié pour communiquer avec le réseau de communications sans fil (10) et la désactivation d'une caractéristique du dispositif sans fil (14) incluant une ou plusieurs parmi entrées multiples/sorties multiples, agrégation de porteuses et connectivité double.

2. Procédé selon la revendication 1, dans lequel la sélection du dispositif sans fil (14) à diriger à l'écart du réseau de communications sans fil (10) comprend en outre la sélection du dispositif sans fil (14) sur la base d'au moins l'un parmi : des informations d'abonnement du dispositif sans fil (14) ; une charge sur le réseau de communications sans fil (10) causée par le dispositif sans fil (14) ; un schéma de mobilité du dispositif sans fil (14) ; le fait de savoir si le dispositif sans fil (14) prend en charge une caractéristique utilisée pour une orientation de trafic entre des réseaux ; et un type de communication entre le dispositif sans fil (14) et le réseau de communications sans fil (10).

3. Procédé selon la revendication 1, dans lequel la désactivation de la caractéristique du dispositif sans fil (14) comprend la désactivation d'au moins l'une du groupe constitué d'une capacité d'entrées multiples et sorties multiples, MIMO, une capacité d'agrégation de porteuses, CA, une aptitude à utiliser une bande sans licence, des caractéristiques d'amplification, et une capacité de connectivité double.

4. Procédé selon la revendication 1, dans lequel le fait de déterminer que le délestage d'un ou plusieurs dispositifs sans fil dans le réseau de communications sans fil (10) est souhaité comprend en outre le fait de déterminer
qu'une utilisation de puissance du dispositif sans fil (14) peut être réduite en orientant le dispositif sans fil (14) à l'écart du réseau de communications sans fil (10).

5. Procédé selon l'une quelconque des revendications précédentes comprenant en outre :
le fait de déterminer (204) si le délestage d'un ou plusieurs dispositifs sans fil (14) du réseau de communications sans fil (10) est toujours souhaité ; et
en réponse à la détermination que le délestage n'est plus souhaité, l'arrêt de limitation de la connexion du dispositif sans fil (14) au réseau de communications sans fil (10).

6. Procédé selon l'une quelconque des revendications précédentes comprenant en outre :
le fait de déterminer (206) si le dispositif sans fil (14) est toujours apte à être limité ; et
en réponse à la détermination que le dispositif sans fil (14) n'est plus apte, l'arrêt de limitation de la connexion du dispositif sans fil (14) au réseau de communications sans fil (10).

7. Procédé selon l'une quelconque des revendications précédentes dans lequel le réseau de communications sans fil (10) est l'un parmi un réseau de communications cellulaire et un réseau d'accès local sans fil, et l'orientation du dispositif sans fil (14) étant desservi par le réseau de communications sans fil comprend l'orientation du dispositif sans fil (14) pour se connecter à un réseau de communications cellulaire ou à un réseau d'accès local sans fil différent dudit réseau de communications sans fil (10).

8. Nœud de réseau (22) pour un réseau de communications sans fil (10) conçu pour :
déterminer qu'un délestage d'un ou plusieurs dispositifs sans fil dans le réseau de communications sans fil (10) est souhaité, lorsque le nœud de réseau (22) détermine qu'un niveau d'interférence dans une partie du réseau de communications sans fil desservant le ou les dispositifs sans fil (10) est supérieur à un seuil d'interférence ;
après détermination qu'un délestage d'un ou plusieurs dispositifs sans fil dans le réseau de communications sans fil (10) est souhaité, sélectionner un dispositif sans fil (14) parmi le ou les dispositifs sans fil (14) à diriger à l'écart du réseau de communication sans fil (10), sur la base d'un niveau d'interférence causé par le dispositif sans fil (14), et pour se connecter à un autre réseau de communications sans fil ; et
limiter au moins un paramètre de transmission d'une connexion du dispositif sans fil (14) au réseau de communications sans fil (10) pour fournir une orientation de trafic du dispositif sans fil (14) à l'écart du réseau de communications sans fil (10), dans lequel au moins un paramètre de transmission d'une connexion du dispositif sans fil (14) est limité par au moins l'une parmi la réduction d'un nombre d'instances de planification pendant lesquelles le dispositif sans fil (14) est planifié pour communiquer avec le réseau de communications sans fil (10) et la désactivation d'une caractéristique du dispositif sans fil (14) incluant une ou plusieurs parmi entrées multiples/sorties multiples, agrégation de porteuses et connectivité double.

9. Nœud de réseau (22) selon la revendication 8 conçu pour mettre en œuvre le procédé selon l'une quelconque des revendications 2 à 7.
